# FASCICULE DE BREVET EUROPEEN

(11) **EP 1 828 933 B1**
(45) Date de publication et mention de la délivrance du brevet: **04.04.2018**
(21) Numéro de dépôt: 05820839.8
(22) Date de dépôt: 22.11.2005
(51) Int. Cl.: G06F 17/30

(54) **PROCEDE ET SYSTEME DE GESTION DYNAMIQUE DE CONNAISSANCES**
VERFAHREN UND SYSTEM ZUR DYNAMISCHEN VERWALTUNG VON WISSEN
METHOD AND SYSTEM FOR DYNAMIC MANAGEMENT OF KNOWLEDGE

(30) Priorité: 02.12.2004 FR 0412806
(43) Date de publication de la demande: 05.09.2007
(73) Titulaire: Bourquin, François, 63000 Clermont-Ferrand (FR)
(72) Inventeur: Bourquin, François, 63000 Clermont-Ferrand (FR)
(74) Mandataire: Novagraaf Technologies
(86) Numéro de dépôt international: PCT/FR2005/002901
(87) Numéro de publication internationale: WO 2006/058979

(56) Documents cités:
- REIMER J A: "Enterprise Content Management" DATENBANK SPEKTRUM, [Online] vol. 2, no. 4, 2002, pages 17-22, XP002335756 Extrait de l'Internet: URL:http://mordor.prakinf.tu-ilmenau.de/pa pers/dbspektrum/dbs-04-17.pdf> [extrait le 2005-07-12]
- ESPOSITO F ET AL: "Information Capture and Semantic Indexing of Digital Libraries through Machine Learning Techniques" PROCEEDINGS OF THE 4TH INTERNATIONAL CONFERENCE ON DOCUMENT ANALYSIS AND RECOGNITION, vol. 2, 18 août 1997 (1997-08-18), - 20 août 1997 (1997-08-20) pages 722-727, XP010244823 ISBN: 0-8186-7898-4

## Description

La présente invention concerne un procédé et un système de gestion de connaissances, notamment sous la forme de documents numérisés, accessibles par l'intermédiaire d'un réseau de transmission de données.

Elle s'applique notamment, mais non exclusivement, à la gestion de contenus d'entreprise ECM (Enterprise Content Management).

De plus en plus, les entreprises archivent leurs documents sous forme électronique, si bien que la quantité d'informations accessibles par un réseau privé d'entreprise a tendance à augmenter d'une manière exponentielle. Il existe à cet effet des outils de gestion électronique de documents permettant de numériser et stocker des documents et comportant des mécanismes de classement et de recherche de documents. Toutefois, au fur et à mesure que la quantité de documents archivés augmente, ces outils apparaissent très rudimentaires, et en tout cas inadaptés au volume croissant d'informations stockées, dans la mesure où ils ne permettent pas de retrouver facilement un document stocké sous forme numérique ou une information particulière apparaissant dans un ou plusieurs documents.

Pour tenter d'apporter une solution à ce problème, on a prévu des systèmes mettant en oeuvre des plans de classement ou des mécanismes de pré-qualification des documents au moment de leur stockage statique. Ces mécanismes permettent de qualifier le contenu d'un document par la saisie de formulaires prédéfinis dont le nombre de champs à remplir augmente avec la diversité des documents à classer ou avec l'efficacité souhaitée des recherches effectuées parmi les documents ainsi classés. **Un tel système est décrit dans le document de** James A. Reimer "Enterprise Content Management", datebank -spektrum, vol. 2, numéro 4, pages 17 à 22, 2002**.** Or si le nombre de champs à remplir devient trop important, les utilisateurs ne sont pas incités à utiliser de tels systèmes et les documents finissent par être stockés sans classement. En outre, de tels mécanismes de pré-qualification ou plans de classement sont généralement prédéfinis pour certains types de documents. Lorsqu'il s'agit de stocker de nouveaux types de documents, ces mécanismes ou plans de classement doivent être complétés manuellement pour tenir compte des nouveaux types de documents à stocker.

Il existe par ailleurs des systèmes de recherche couramment appelés moteurs ou méta moteurs de recherche permettant d'effectuer des recherches de documents sur critères dans des réseaux tels que le réseau Internet. A cet effet, ces moteurs intègrent des mécanismes d'indexation du contenu de tous les documents accessibles, les index ainsi générés étant ensuite utilisés pour traiter des requêtes de recherche. Toutefois, lorsque la base documentaire sur laquelle fonctionne un tel système de recherche devient très volumineuse, les requêtes de recherche susceptibles d'être introduites conduisent souvent à un nombre de réponses tellement important que celles-ci sont inexploitables.

La présente invention a pour but de supprimer ces inconvénients. Cet objectif est atteint par la solution décrite dans les revendications. Un mode de réalisation préféré de l'invention sera décrit ci-après, à titre d'exemple non limitatif, avec référence aux dessins annexés dans lesquels :
La figure 1 représente schématiquement un système de gestion de connaissances selon l'invention, connecté à des réseaux de transmission de données ;
La figure 2 montre plus en détail le système représenté sur la figure 1 ;
Les figures 3 et 4 illustrent sous la forme d'organigrammes des traitements effectués par le système représenté sur la figure 1 ;
Les figures 5 et 6 représentent des écrans de réponse à des requêtes de recherche de documents ;
La figure 7 montre une représentation graphique d'un traitement de cheminement du document selon l'invention.

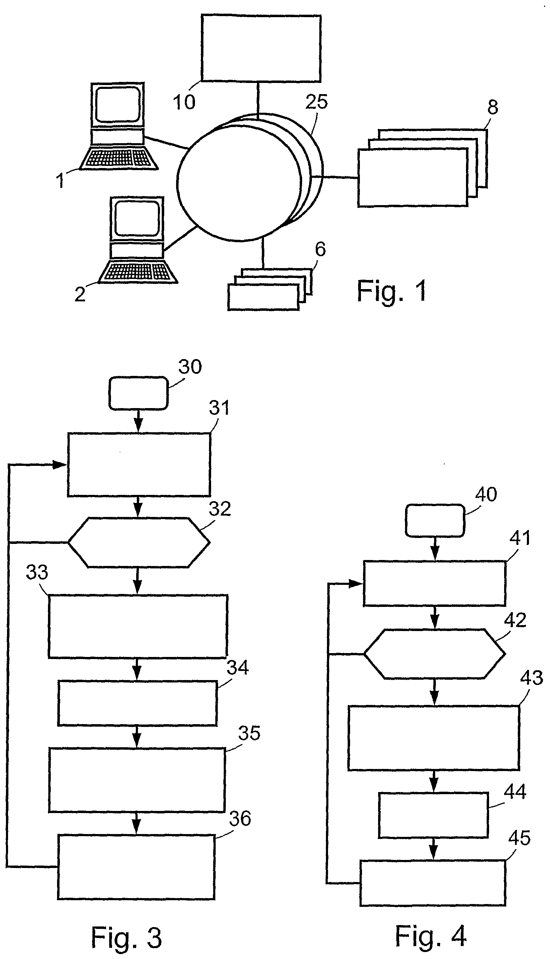

La figure 1 représente un système 10 de gestion de stockage de documents l'invention. Ce système est conçu pour être connecté à des réseaux de transmission de données 25, publics ou privés (Internet, Intranet, Extranet), de manière à pouvoir communiquer avec des terminaux d'utilisateurs 1, 2, des scanners 6 de type photocopieur en réseau, conçus notamment pour numériser des documents et les envoyer par message électronique, ainsi qu'à des bases de données externes et des portails 8 rassemblant des liens vers d'autres bases de données et des documents, accessibles par un réseau 25.

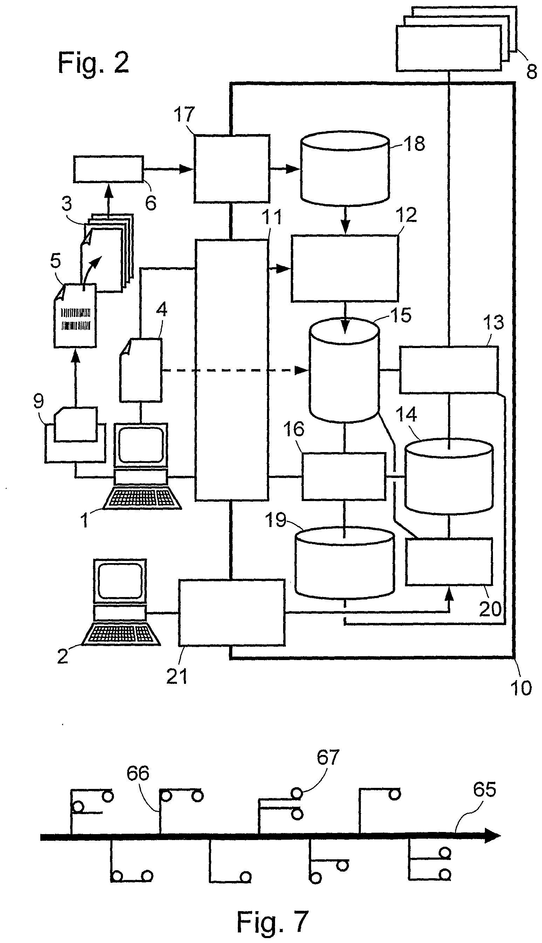

Sur la figure 2, le système 10 comprend :
- des interfaces d'accès 11, 17, 21 auxquelles des postes d'utilisateurs 1, 2 et des scanners 6, peuvent se connecter par exemple par l'intermédiaire d'un réseau de transmission de données 25,
- un espace de stockage de documents 15, pouvant être constitué d'une ou plusieurs bases de données et/ou par des arborescences de répertoires, réparties sur un ou plusieurs serveurs,
- un moteur d'indexation 13 permettant d'indexer périodiquement les documents et contenus des documents mémorisés dans l'espace de stockage 15, le résultat de cette indexation étant stocké dans une base d'indexation 14, et
- un moteur de recherche 16 permettant d'exploiter la base d'indexation 14 pour répondre à des requêtes de recherche de documents.

Le moteur d'indexation 13 peut également fonctionner sur des systèmes d'information 8, tels que des bases de données ou des portails, externes au système et accessibles par un réseau de transmission de données 25. A cet effet, le moteur d'indexation est associé à des moyens pour se connecter à chacun des systèmes d'informations et d'accéder à leurs contenus respectifs.

Selon l'invention, ce système comprend en outre un serveur 12 de pré-traitement et de stockage de documents, conçu pour recevoir des documents numériques et leur appliquer un pré-traitement automatique prédéfini, ces documents étant à cet effet stockés préalablement dans un espace de stockage temporaire 18.

Les documents numériques susceptibles d'être traités par le serveur 12 peuvent être à l'origine des documents sous forme papier ayant subi un traitement de numérisation. En outre, ils peuvent être de n'importe quel type, texte, tableau, images, séquence audio ou vidéo, ou lien hypertexte, et plus généralement multimédia, et de n'importe quel format.

Les interfaces du système 10 comprennent notamment :
- une interface utilisateur 11 permettant d'appliquer des requêtes de recherche au moteur de recherche 16 et de recevoir les résultats correspondants fournis en réponse par ce dernier, et également d'introduire de nouveaux documents dans l'espace de stockage 15, et
- une interface de stockage 17 conçue pour recevoir des documents issus d'un traitement de numérisation, effectué typiquement par un photocopieur équipé d'une interface réseau permettant d'envoyer des documents numérisés sous la forme de messages électroniques.

Pour stocker un document 3 sous forme papier, l'utilisateur doit disposer d'une page d'entête 5 spécifiant un plan de classement ou une arborescence de répertoires dans laquelle le document doit être stocké dans l'espace de stockage 15. L'utilisateur choisit la page d'entête en fonction de son identité et de l'organisation à laquelle il appartient, ainsi que du type de document à archiver et classer.

Ce plan de classement est spécifié sous la forme d'une succession de noms de répertoires imbriqués les uns dans les autres, le premier répertoire mentionné étant le répertoire racine, et le dernier étant celui où le document doit être effectivement stocké. A titre d'exemple, ce plan de classement peut comporter en premier lieu, un nom de service d'entreprise, un libellé d'activité, le nom de la personne qui a émis le document ou qui en effectue le classement, et éventuellement un libellé de domaine ou sujet du document.

Typiquement, pour une organisation variable dans le temps, telle qu'une entreprise ou un groupe d'entreprises, le plan de classement est organisé conformément à l'organisation actuelle de l'entreprise, par exemple un répertoire par unité, puis par service dans chaque unité, puis par personne dans chaque service. Le plan de classement peut également comprendre des domaines ou thèmes partagés au sein d'une unité, d'un service ou de thèmes personnels à une personne.

Pour faciliter sa lecture numérique et éviter les risques d'erreur, ce plan de classement est avantageusement codé sous la forme d'un ou plusieurs codes optiques, par exemple des codes à barres, chaque code optique correspondant à un nom de répertoire de l'arborescence. La page d'entête 5 comportant le plan de classement peut être obtenue à l'aide d'un logiciel de traitement de texte classique ayant accès à une police de caractères représentés dans le code optique choisi. Cette page peut ensuite être imprimée à l'aide d'une imprimante 9 ordinaire.

La page d'entête 5 est placée sur le dessus de la ou des pages constituant le document 3 à numériser et classer, l'ensemble étant introduit dans le photocopieur 6 ou "mopieur", pour être numérisé et envoyé par message électronique. A cet effet l'utilisateur doit mentionner une adresse de messagerie électronique où doit être envoyé le document numérisé. Cette adresse de destinataire est choisie parmi un ensemble d'adresses prédéfinies du système 10. Chacune des ces adresses correspond en fait à un répertoire dans l'espace de stockage temporaire 18, chacun de ces répertoires étant associé à une séquence de pré-traitements réalisés par des logiciels, à appliquer successivement aux documents qui y sont stockés. L'utilisateur peut également spécifier dans le champ objet du message électronique le titre du document ou le nom du fichier dans lequel le document doit être stocké.

Quelle que soit l'adresse du destinataire, et donc le traitement correspondant, choisie par l'utilisateur parmi ces adresses prédéfinies, le document numérisé est transmis en fichier joint dans un message électronique à l'interface 17 qui extrait le document du message et le range dans l'espace de stockage 18, dans un répertoire déterminé en fonction de l'adresse du destinataire du message électronique.

Le serveur de pré-traitement 12 est conçu pour scruter périodiquement les répertoires de stockage temporaire 18, à la recherche de documents, et pour appliquer à chaque document trouvé les pré-traitements prédéfinis correspondant au répertoire dans lequel se trouve le document. Le serveur de pré-traitement 12 assure ensuite le stockage des fichiers résultants de ces pré-traitements dans l'espace de stockage 15, conformément au plan de classement spécifié dans la page d'entête 5 du document. Les fonctions du serveur de pré-traitement sont par exemple réalisées à l'aide des logiciels "SMTP Capture" et "Autostore" commercialisé par la société Blue Mega.

La procédure 30 exécutée périodiquement par le serveur de pré-traitement 12 est illustrée par la figure 3. Dans une première étape 31 de cette procédure, le serveur 12 scrute les répertoires de stockage temporaires 18 à la recherche de documents. Pour chaque document trouvé (étape 32), il détermine en fonction du répertoire où se trouve le document, des pré-traitements qu'il exécute sur le document (étape 33). Ces pré-traitements consistent tout d'abord à séparer la page d'entête 5 du reste du document. En outre, selon le répertoire de stockage, ces pré-traitements peuvent comprendre une reconnaissance optique de caractères, pour convertir des images en texte, des traitements d'image, des conversions de format de fichier, des traductions de texte, etc.

A l'étape suivante 34 de cette procédure, le serveur 12 lit la page d'entête 5 et convertit en caractères alphanumériques les codes optiques qui y figurent. A l'étape suivante 35, le serveur 12 crée, s'ils n'existent pas déjà dans l'espace de stockage 15, les répertoires mentionnés par les codes optiques lus, le premier code optique correspondant à un répertoire racine, les autres codes optiques spécifiant des noms de répertoires successivement inclus les uns dans les autres à partir de ce répertoire racine.
Enfin à la dernière étape 36 de cette procédure, le document ainsi pré-traité est transféré de l'espace de stockage temporaire 18 dans le répertoire spécifié par le dernier code optique lu.

L'espace de stockage 15 comprend par exemple une ou plusieurs arborescences de répertoires et sous répertoires, réparties sur un ou plusieurs disques, éventuellement sur plusieurs serveurs dans un réseau. Il peut comprendre également une ou plusieurs bases de données par exemple de type "Instranet" ou "Documentum". L'espace de stockage 15 est également accessible via un réseau, par exemple le réseau interne de l'entreprise, à des terminaux d'utilisateurs souhaitant y insérer directement des documents.

Le moteur d'indexation 13 est conçu sur la base d'un moteur d'indexation classique, de préférence à technologie neuronale, pour analyser sémantiquement et indexer le contenu en texte intégral des documents stockés dans l'espace de stockage 15. Il en en outre conçu pour indexer en association avec chaque document et son contenu, également le nom du document, ainsi que les noms et les niveaux hiérarchiques des répertoires de l'arborescence dans laquelle le document est stocké. L'indexation du contenu d'un document consiste également à lire le document en texte intégral, et à effectuer une analyse sémantique pour en extraire des mots représentatifs à ajouter dans la base d'indexation. L'indexation consiste également à générer automatiquement un résumé du sommaire document. Le résultat de cette indexation est stocké dans la base de données d'indexation 14 qui est exploitée par le moteur de recherche 16. Les moteurs d'indexation 13 et de recherche sont par exemple réalisés à partir des méta moteurs de recherche et d'indexation de la société Kartoo (accessible sur le réseau Internet à l'adresse http://www.kartoo.com).

La procédure 40 exécutée périodiquement, par exemple toutes les 15 minutes, par le moteur d'indexation 13 est illustrée par la figure 4. A la première étape 41 de cette procédure, le moteur d'indexation scrute l'espace de stockage 15 à la recherche de nouveaux documents qui ne sont pas encore indexés dans la base d'indexation 14. Pour chaque nouveau document trouvé (étape 42), le moteur d'indexation indexe l'arborescence où est stocké le document (étape 43), indexe le nom du document (étape 44), ainsi que son contenu (étape 45). Les résultats de ces indexations sont stockés dans la base d'indexation 14.

Par ailleurs, l'interface utilisateur 11 inclut de préférence une procédure d'identification et d'authentification de l'utilisateur, impliquant la saisie d'un nom d'utilisateur et d'un mot de passe, ce qui permet de définir et de mémoriser un environnement personnel d'accès vers lequel l'utilisateur est dirigé lorsqu'il accède au système 10. Cet accès peut être indifféremment effectué par l'intermédiaire d'un réseau Intranet, Extranet, ou Internet 24.

L'interface utilisateur 11 peut être réalisée par exemple sous la forme d'un serveur Web, avantageusement conçu pour tout type de terminaux (PC, assistant électronique personnel - PDA, téléphone mobile, ...). La première page affichée donne accès à un ensemble d'outils de recherche de documents, de définition d'un plan de classement dans l'espace de stockage 15, ou d'insertion d'un document numérique dans cet espace de stockage conformément à un plan de classement, et d'accès à un répertoire personnel.

L'accès au moteur de recherche 16 permet à l'utilisateur d'introduire des requêtes de recherche contenant une sélection de bases de données 15, 8 où il souhaite effectuer une recherche, ainsi que des critères de recherche, par exemple sous la forme d'une combinaison de mots clés devant être présents ou absents dans la base d'indexation 14 en association avec les documents relevés. Une fois validée, chaque requête de recherche est transmise au moteur de recherche 16 qui exécute la recherche sur les bases 15, 8 spécifiées en exploitant la base d'indexation 14, et plus précisément en recherchant des cohérences de contenus révélées par des mots indexés communs. Ces cohérences permettent de faire apparaître des points communs entre des univers de personnes ou d'unités d'une organisation.

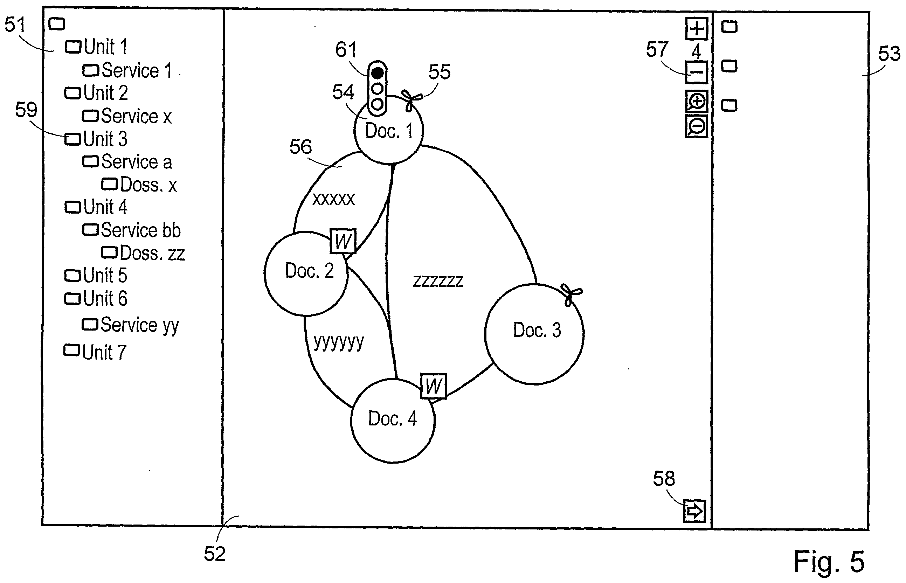

Comme illustré par l'écran représenté sur la figure 5, les réponses aux requêtes de recherche sont avantageusement fournies dans une fenêtre d'écran 52 sous une forme graphique dans laquelle chaque document ou répertoire trouvé satisfaisant aux critères de recherche apparaît sous la forme d'une icone (cercle) 54 spécifique ou d'un logotype mnémotechnique, évoquant un répertoire significatif de l'arborescence dans lequel le document est stocké, c'est-à-dire par exemple une unité de l'organisation. Chaque icône de document est associée à un logo 55 indiquant le type de document ou qu'il s'agit d'un répertoire, au nom du document ou répertoire, les différentes icones pouvant être reliées les unes aux autres par des liens 56 associés à des mots clés communs se trouvant dans les deux documents ainsi reliés. La taille des icones 54 symbolisant les documents varie en fonction de la pertinence du document (nombre d'occurrences des mots-clés recherchés). La fenêtre graphique 52 est associée à des boutons de commande 57, 58 permettant d'ajuster le grossissement du graphique affiché dans la fenêtre 52 et de la taille des icônes, de commander l'affichage d'éventuels autres résultats de recherche représentés dans d'autres graphiques, ainsi que d'autres commandes pour mémoriser, transmettre, et imprimer le contenu de la fenêtre graphique.

En outre, la fenêtre 52 de présentation graphique des résultats d'une recherche est associée à une zone d'écran (bandeau gauche 51) dans laquelle figure la liste des répertoires 59 de l'espace de stockage 15 où sont rangés les documents apparaissant dans la représentation graphique. Lorsque l'utilisateur désigne un cercle 54 représentant un document (par exemple en y plaçant un pointeur), un résumé (ou bien une ou plusieurs parties du document dans laquelle figurent les mots clés recherchés) est affiché par exemple dans un bandeau 53 situé à droite de la représentation graphique. En outre le répertoire dans lequel se trouve le document ainsi désigné apparaît en surbrillance dans le bandeau gauche 51.

La représentation graphique indique également des mots-clés contenus dans plusieurs des documents présentés, ces mots-clé étant montrés en association avec des liens 56 reliant les icones 54 symbolisant les documents contenant ces mots clés.

Si l'utilisateur désigne d'une autre façon un document (par exemple par un double click de souris), le document est ouvert dans une fenêtre d'écran permettant la consultation de son contenu. On peut également prévoir de faire apparaître un menu contextuel (par exemple à la suite d'un click droit de souris) listant des commandes susceptibles d'être appliquées au document.

Avantageusement, le moteur de recherche 16 mémorise toutes les recherches (requêtes et résultats) effectuées pour les utilisateurs dans une base de données de recherches 19, qui est analysée périodiquement pour en extraire les requêtes de recherche les plus fréquemment émises par les utilisateurs ou les plus fructueuses. Le contenu de cette base de données est accessible au moteur d'indexation 13 qui l'utilise pour rendre plus efficace l'indexation effectuée.

Cette base de données est également accessible aux utilisateurs au moyen de commandes affichées par exemple dans le bandeau droit 53 montré sur la figure 5, en l'absence de désignation d'un document. Ces commandes donnent accès respectivement aux dernières recherches de l'utilisateur, et aux recherches les plus fréquentes des utilisateurs du système 10 qui peuvent être présentées sous forme de statistiques. L'une de ces commandes permet en outre de préciser la recherche en cours en ajoutant de nouveaux mots clés au critère de recherche préalablement introduit par l'utilisateur. Lorsque l'utilisateur sélectionne une recherche précédente, le résultat de cette recherche est affiché sous forme graphique conformément à l'exemple représenté sur la figure 5.

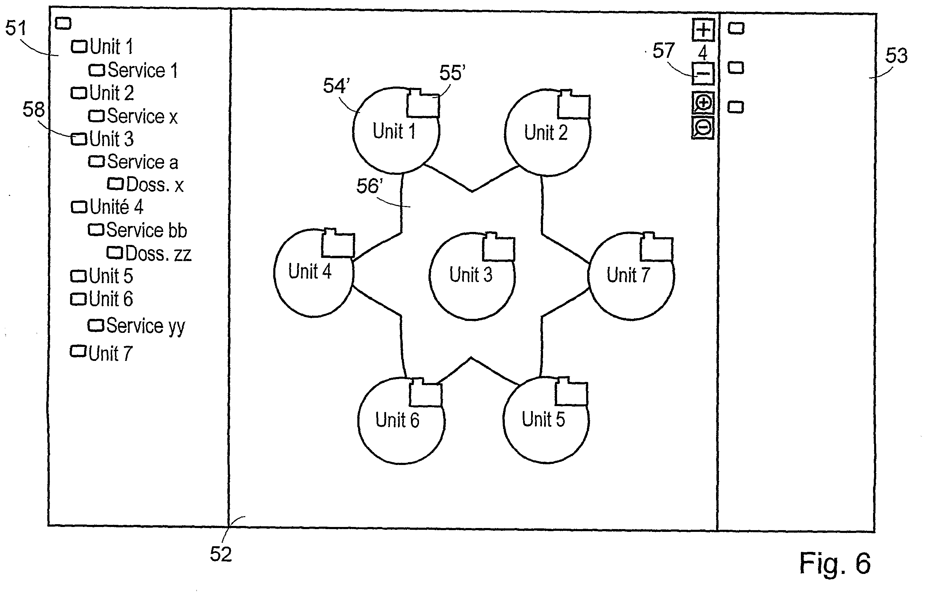

Si l'utilisateur active (double click de souris) un répertoire 59 affiché dans le bandeau gauche 51, le contenu du répertoire (documents et sous-répertoires) s'affiche dans la fenêtre graphique 52, comme représenté sur la figure 6. Sur cette figure, les répertoires sont présentés d'une manière analogue aux documents, par des icones 54' représentant chacune un répertoire et évoquant éventuellement le service correspondant au répertoire. Chacune des icones 54' est associée à un logo 55' indiquant qu'il s'agit d'un répertoire. Les icones peuvent 54' également contenir un logo relatif au répertoire racine dans lequel se trouve le répertoire. Les icones 54' correspondant à des sous-répertoires situés dans un même répertoire sont reliés par des liens 56'. De cette manière, l'utilisateur accède facilement à tous les documents figurant dans le même répertoire qu'un document relevé dans une recherche. Il peut également "naviguer" dans les différents répertoires de l'espace de stockage 15 en activant le répertoire racine "plan de classement".

Il résulte de la description qui précède que l'invention est basée sur la combinaison d'une gestion électronique de documents dans laquelle des documents sont classés dans une arborescence de répertoires créés automatiquement en fonction de plans de classement, et de fonctions de recherches de documents étendues faisant intervenir l'indexation portant non seulement sur le contenu des documents, mais également sur les noms des documents et des répertoires dans lesquels ceux-ci sont classés. L'invention permet ainsi de combiner les performances d'une organisation classique en arborescence de répertoires d'un disque dur de serveur, et celles d'un moteur de recherche utilisant une base d'indexation générée à l'aide d'un moteur d'indexation utilisant l'intelligence artificielle neuronale. En accédant à des systèmes d'information externes 8, l'invention permet également d'établir des rapprochements entre des documents, des répertoires pouvant correspondre à des unités d'organisations et des informations provenant de systèmes d'informations externes. Ces rapprochements permettent de faire apparaître des unités sémantiques communes entre différents domaines qui pouvaient n'avoir a priori pas de rapports entre eux. Ces rapprochements de domaines mis en évidence sous la forme d'une cartographie synthétique, permettent en outre à l'utilisateur de faire de nouvelles associations d'idées.

Tel que représenté sur la figure 2, le système selon l'invention peut également comprendre un serveur de gestion 20 qui assure la gestion et le suivi des documents stockés dans l'espace de stockage 15 et indexés dans la base d'indexation 14. Le serveur de gestion est paramétré par l'intermédiaire d'une interface de paramétrage 21, par exemple de type Web accessible à des personnes autorisées à définir des paramètres de gestion et de suivi des documents de l'espace de stockage 15. L'interface 21 permet ainsi notamment de définir des droits d'accès aux répertoires de l'espace de stockage 15 attribués aux utilisateurs du système.

Le serveur de gestion 20 présente tout d'abord une fonction de gestion de la durée de vie de chaque document stocké dans l'espace de stockage 15. Cette durée de vie peut être fixée par defaut à une valeur prédéfinie, par exemple de 3 ou 6 mois et qui peut être modifiée ensuite document par document, cette information de durée de vie étant par exemple stockée sous la forme d'un attribut "date d'expiration" du document dans la base d'indexation 14. La modification de cet attribut pour un document est par exemple effectuée à partir de la fenêtre graphique 52, par l'intermédiaire d'un menu contextuel qui est affiché en actionnant le bouton droit de la souris sur le cercle 54 symbolisant le document. Par ailleurs, l'interface 21 permet de gérer globalement cet attribut pour tous les fichiers d'un répertoire ou d'un ensemble de répertoires.

Lorsque la date d'expiration d'un document affiché dans la fenêtre graphique 52 est arrivée à échéance, une icône 61, par exemple représentant un feu rouge est affichée à proximité du cercle 54 symbolisant le document. Passé un certain délai, par exemple d'un mois après cette date d'expiration, le document est retiré du répertoire où il se trouve pour être placé dans un répertoire de documents expirés. La base d'indexation est alors mise à jour pour tenir compte du retrait du document du répertoire où il se trouvait.

Le serveur de gestion 20 comprend également une fonction permettant d'associer si nécessaire à un document de l'espace de stockage 15 un cheminement dans différents répertoires de l'espace de stockage, par exemple dans les répertoires personnels d'utilisateurs ou dans des répertoires communs à plusieurs utilisateurs. Un tel cheminement définit un cycle de validation du document. Un tel cheminement est spécifié sous la forme d'une liste de noms de répertoires dans lesquels doit circuler le document et d'utilisateurs destinataires de ce document, cette liste étant associée en tant qu'attribut au document dans la base d'indexation 14.

Lorsqu'un utilisateur a terminé de consulter ou de modifier le document à partir de la fenêtre graphique 52, il actionne une commande de validation du document qui déclenche la mise à disposition du document à la personne suivante dans le cheminement associé au document, cette commande figurant par exemple dans le menu contextuel affiché en actionnant le bouton droit de la souris sur le cercle symbolisant le document. Cette mise à disposition est réalisée par l'émission d'un message électronique de notification à la personne suivante. En outre, cette action de validation déclenche éventuellement le déplacement du document vers le répertoire suivant dans le cheminement associé au document, ainsi que la mise à jour de la base d'indexation 14 pour tenir compte de ce déplacement.

Un tel cheminement est avantageusement spécifié par l'intermédiaire de l'interface 21 sous forme graphique conformément à l'exemple simplifié illustré par la figure 7. Cette figure montre un axe orienté 65 symbolisant la vie d'un document. Cet axe comporte un certain nombre de branches 66 symbolisant respectivement des répertoires de l'espace de stockage 15 dans lesquels le document doit être successivement déplacé suivant le sens de l'axe 65, conformément au cheminement souhaité pour le document. Chaque branche relie l'axe 65 à un ou plusieurs cercles 67 symbolisant respectivement des personnes devant consulter ou traiter le document et éventuellement les répertoires personnels de ces personnes. Lorsqu'une branche relie successivement deux cercles, cela signifie que le document doit être traité successivement par les deux personnes symbolisées par ces deux cercles en partant de l'axe 65. Lorsqu'une branche se subdivise en plusieurs branches reliées à des cercles, cela signifie que l'une ou l'autre des personnes symbolisées par les cercles doit traiter le document, le déplacement du document dans le répertoire suivant étant alors effectué une fois qu'il a été validé par l'une ou l'autre de ces personnes. Lorsqu'une même branche relie plusieurs cercles, cela signifie que toues les personnes symbolisées par les cercles doivent traiter le document dans un ordre quelconque, le déplacement du document dans le répertoire suivant étant alors effectué une fois qu'il a été validé par toutes ces personnes. L'utilisateur est invité à introduire des branches reliées à l'axe 65 selon le cheminement défini par l'organisation pour le document, et à introduire ou sélectionner un nom de répertoire pour chaque branche, et un nom de personne pour chaque cercle relié à une branche. L'extrémité de l'axe est associée à des répertoires terminaux dans lesquels le document doit finalement être stocké et où il peut subir un traitement choisi par l'utilisateur (impression, mailing, fax, messagerie électronique, publication automatisée sur un site HTML, ...).

On peut prévoir de relier l'annuaire des membres de l'organisation (annuaire interne, LDAP) au serveur de gestion 20, de manière à faciliter l'introduction des noms de personnes lors de la définition d'un cheminement de document. On peut également prévoir qu'un remplacement d'une personne par une autre dans l'annuaire entraîne une mise à jour automatique des cheminements associés aux documents, notamment en ce qui concerne les répertoires vers lesquels les documents doivent être déplacés et pour l'émission de messages de notification d'arrivée de documents dans le répertoire d'une ou plusieurs personnes.

## Revendications

1. Procédé d'indexation et de recherche de contenus, notamment de documents multimédia, comprenant des étapes de stockage de ces documents dans au moins une arborescence de répertoires imbriqués les uns dans les autres à partir d'un répertoire racine, d'un espace de stockage (15), **caractérisé en ce qu'**il comprend en outre les étapes consistant à :
- pour chaque document mémorisé dans l'espace de stockage, indexer par un ordinateur le contenu sémantique du document et les noms des répertoires imbriqués dans lesquels le document est stocké, notamment un nom de service, un libellé d'activité, un libellé de domaine,
- mémoriser le résultat de l'indexation dans une base d'indexation multidimensionnelle (14) en association avec le document présent dans l'espace de stockage,
- - indexer par un ordinateur le contenu sémantique de documents et de bases de données externes (8), accessibles par des réseaux de transmission de données, et mémoriser le résultat de l'indexation dans la base d'indexation multidimensionnelle (14) en association avec des références respectives aux bases de données externes.
- - sur requête d'un utilisateur, rechercher au moins un document indexé correspondant à la requête à partir de mots clés ou d'une combinaison de mots clés à l'aide de la base d'indexation multidimensionnelle (14) ainsi que par des rapprochements sémantiques entre les documents mémorisés et des informations provenant des bases de données externes permettant de faire apparaître des points communs entre des univers de personnes ou d'unité d'une organisation

2. Procédé selon la revendication 1, **caractérisé en ce que** le rapprochement sémantiques comprend la recherche de cohérences de contenus révélées par des mots indexés communs.

3. Procédé selon la revendication 2, **caractérisé en ce que** les cohérences font apparaître des points communs entre des univers de personnes ou d'unité d'une organisation.

4. Procédé selon la revendication 2, **caractérisé en ce qu'**il comprend en outre une étape de présentation des résultats de la recherche dans laquelle au moins deux documents trouvés sont reliés entre eux lorsqu'ils présentent des mots indexés en commun et/ou qu'ils appartiennent au même répertoire et permettant de faire apparaître des unités sémantiques communes entre différents domaines, une désignation d'un document trouvé permettant l'ouverture de celui-ci.

5. Procédé selon l'une quelconque des revendications 1 à 4, **caractérisé en ce que** les noms des répertoires imbriqués dans lesquels un document est mémorisé dans l'espace de stockage (15) sont définis dans un plan de classement préétabli, les répertoires étant automatiquement créés, si nécessaire, au moment du classement de chaque document dans l'espace de stockage.

6. Procédé selon l'une quelconque des revendications précédentes, **caractérisé en ce que** l'indexation est en outre effectuée sur des documents et des bases de données (8) externes, accessibles par des réseaux (25) de transmission de données.

7. Procédé selon l'une quelconque des revendications précédentes, **caractérisé en ce que** chaque document trouvé durant la recherche est affiché sous la forme graphique en association avec au moins un répertoire dans lequel figure le document trouvé, chaque document trouvé étant présenté sous la forme d'un logotype évoquant l'un des répertoires dans lequel le document est stocké dans l'espace de stockage (15), la désignation d'un des documents trouvés affichant un résumé de celui-ci.

8. Procédé selon l'une quelconque des revendications précédentes, **caractérisé en ce que** les moteurs d'indexation (13) et de recherche sont réalisés à partir de méta moteurs de recherche ou d'indexation.

9. Procédé selon l'une quelconque des revendications précédentes, **caractérisé en ce qu'**il comprend en outre des étapes d'attribution d'une durée de vie à au moins une partie des documents mémorisés dans l'espace de stockage (15), et de retrait d'un document du répertoire où il est stocké dans l'espace de stockage lorsque la durée de vie du document s'est écoulée.

10. Procédé selon l'une quelconque des revendications précédentes, **caractérisé en ce qu'**il comprend en outre des étapes de :
- définition d'un cheminement d'un document mémorisé dans l'espace de stockage (15), le cheminement spécifiant une liste ordonnée de noms de répertoires dans lesquels le document doit être successivement transféré, chaque répertoire étant associé à au moins un identifiant de personne à qui le document est destiné, la liste ordonnée étant associée en tant qu'attribut au document dans la base d'indexation,
- notification d'une personne suivante spécifiée par un cheminement de document, à la suite d'une commande de validation du document par une personne précédente dans le cheminement, pour avertir la personne suivante que le document a été mis à sa disposition.

11. Procédé selon la revendication 10, **caractérisé en ce qu'**il comprend en outre une étape transfert d'un document du répertoire où il se trouve dans l'espace de stockage (15) vers un répertoire suivant dans la liste ordonnée du cheminement, à la suite d'une commande de validation du document par une personne précédente dans le cheminement.

12. Procédé selon l'une quelconque des revendications précédentes, **caractérisé en ce que** les requêtes de recherche les plus fréquemment émises ou les plus fructueuses sont analysées pour rendre plus efficace l'indexation et une recherche ultérieure.

13. Système de gestion de stockage de documents, **caractérisé en ce qu'**il comprend des moyens pour la mise en oeuvre du procédé selon l'une des revendications 1 à 12.

14. Programme d'ordinateur, **caractérisé en ce qu'**il comprend des instructions de code de programme pour l'exécution des étapes d'un procédé selon l'une quelconque des revendications 1 à 12 lorsque ledit programme est exécuté sur un ordinateur.

## Patentansprüche

1. Verfahren für die Indexierung und Suche von Inhalten, insbesondere von Multimediadokumenten, umfassend Speicherschritte dieser Dokumente in mindestens einer Baumstruktur von ab einem Hauptverzeichnis ineinander verschachtelten Verzeichnissen eines Speicherbereichs (15), **dadurch gekennzeichnet, dass** es ferner die Schritte umfasst, die darin bestehen:
- für jedes im Speicherbereich gespeicherte Dokument, Indexieren mittels eines Rechners des semantischen Inhalts des Dokuments und der Namen der verschachtelten Verzeichnisse, in denen das Dokument gespeichert ist, insbesondere einen Abteilungsnamen, eine Aktivitätsbezeichnung, eine Bereichsbezeichnung,
- Speichern des Ergebnisses der Indexierung in einer multidimensionalen Indexierungsdatenbank (14) in Kombination mit dem im Speicherbereich vorhandenen Dokument,
-- Indexieren, mit einem Rechner, des semantischen Inhalts von Dokumenten und von externen Datenbanken (8), die durch Datenübertragungsnetze erreichbar sind, und Speichern des Ergebnisses der Indexierung in der multidimensionalen Indexierungsdatenbank (14) in Kombination mit jeweiligen Bezügen zu den externen Datenbanken,
-- auf Anfrage eines Benutzers, Suchen mindestens eines indexierten Dokuments, das der Suchanfrage entspricht, auf der Basis von Schlüsselwörtern oder einer Kombination von Schlüsselwörtern mit Hilfe der multidimensionalen Indexierungsdatenbank (14) sowie semantische Abgleichungen zwischen den gespeicherten Dokumenten und den Informationen aus externen Datenbanken, die erlauben, gemeinsame Punkte zwischen Welten von Personen oder einer Einheit einer Organisation sichtbar zu machen.

2. Verfahren nach Anspruch 1, **dadurch gekennzeichnet, dass** die semantische Abgleichung die Suche nach inhaltlichen Übereinstimmungen umfasst, die durch gemeinsame indexierte Wörter ermittelt werden.

3. Verfahren nach Anspruch 2, **dadurch gekennzeichnet, dass** die Übereinstimmungen gemeinsame Punkte zwischen Welten von Personen oder einer Einheit einer Organisation sichtbar machen.

4. Verfahren nach Anspruch 2, **dadurch gekennzeichnet, dass** es ferner einen Darstellungsschritt der Ergebnisse der Suche umfasst, in dem mindestens zwei gefundene Dokumente miteinander verbunden werden, wenn sie gemeinsam indexierte Wörter aufweisen und/oder wenn sie zum selben Verzeichnis gehören und erlauben, zwischen verschiedenen Gebieten gemeinsame semantische Einheiten sichtbar zu machen, wobei eine Bezeichnung eines gefundenen Dokuments das Öffnen desselben erlaubt.

5. Verfahren nach einem der Ansprüche 1 bis 4, **dadurch gekennzeichnet, dass** die Namen der verschachtelten Verzeichnisse, in denen ein Dokument im Speicherbereich (15) gespeichert ist, in einem vorher festgelegten Ablageplan festgelegt sind, wobei die Verzeichnisse, wenn notwendig, im Augenblick der Ablage jedes Dokuments im Speicherbereich automatisch geschaffen werden.

6. Verfahren nach einem der vorangehenden Ansprüche, **dadurch gekennzeichnet, dass** die Indexierung ferner bei Dokumenten und externen Datenbanken (8) durchgeführt wird, die von Datenübertragungsmetzen (25) erreichbar sind.

7. Verfahren nach einem der vorangehenden Ansprüche, **dadurch gekennzeichnet, dass** jedes während der Suche gefundene Dokument in graphischer Form in Kombination mit mindestens einem Verzeichnis, in dem das gefundene Dokument vorhanden ist, angezeigt wird, wobei jedes gefundene Dokument in Form eines Bildzeichens dargestellt ist, das auf eines der Verzeichnisse verweist, in dem das Dokument im Speicherbereich (15) gespeichert ist, wobei die Bezeichnung eines der gefundenen Dokumente eine Zusammenfassung desselben anzeigt.

8. Verfahren nach einem der vorangehenden Ansprüche, **dadurch gekennzeichnet, dass** die Indexierungs- (13) und Suchmaschinen auf der Basis von Meta-Indexierungs- oder -Suchmaschinen realisiert sind.

9. Verfahren nach einem der vorangehenden Ansprüche, **dadurch gekennzeichnet, dass** es ferner Schritte der Zuweisung einer Lebensdauer für mindestens einen Teil der im Speicherbereich (15) gespeicherten Dokumente und der Entfernung eines Dokuments aus dem Verzeichnis, in dem es im Speicherbereich gespeichert ist, wenn die Lebensdauer des Dokuments abgelaufen ist, umfasst.

10. Verfahren nach einem der vorangehenden Ansprüche, **dadurch gekennzeichnet, dass** es ferner Schritte umfasst:
- des Festlegens einer Wegstrecke eines im Speicherbereich (15) gespeicherten Dokuments, wobei die Wegstrecke eine geordnete Liste von Namen von Verzeichnissen spezifiziert, in die das Dokument sukzessiv zu übertragen ist, wobei jedes Verzeichnis mindestens einem Kennwort einer Person zugeordnet ist, für die das Dokument bestimmt ist, wobei die geordnete Liste dem Dokument in der Indexierungsdatenbank als Attribut zugeordnet ist,
- des Benennens, nach einem Validierungsbefehl des Dokuments durch eine auf der Wegstrecke vorangehende Person, einer mittels einer Dokumentenwegstrecke spezifizierten nächsten Person, um die nächste Person zu benachrichtigen, dass ihr das Dokument zur Verfügung gestellt wurde.

11. Verfahren nach Anspruch 10, **dadurch gekennzeichnet, dass** es, nach einem Validierungsbefehl des Dokuments durch eine auf der Wegstrecke vorangehende Person, ferner einen Übertragungsschritt eines Dokuments aus dem Verzeichnis, in dem es sich im Speicherbereich (15) befindet, in ein auf der geordneten Liste der Wegstrecke nächstes Verzeichnis umfasst.

12. Verfahren nach einem der vorangehenden Ansprüche, **dadurch gekennzeichnet, dass** die am häufigsten gesendeten oder erfolgreichsten Suchanfragen analysiert werden, um die Indexierung und eine spätere Suche effizienter zu gestalten.

13. Speicherverwaltungssystem von Dokumenten, **dadurch gekennzeichnet, dass** es Mittel für die Umsetzung des Verfahrens nach einem der Ansprüche 1 bis 12 umfasst.

14. Rechnerprogramm, **dadurch gekennzeichnet, dass** es Programmcodebefehle für die Ausführung der Schritte eines Verfahrens nach einem der Ansprüche 1 bis 12 umfasst, wenn das Programm auf einem Rechner ausgeführt wird.

## Claims

1. A method of indexing and searching for content, especially multimedia documents, including steps for storing these documents in at least one directory tree interleaved with each other from a root directory, and a storage space (15), **characterized in that** it further includes the following steps of:
- for each document stored in the storage space, indexing by a computer the semantic content of the document and the names of the nested directories in which the document is stored, including a service name, an activity label, a domain label,
- storing the result of indexing into an multidimensional indexing base (14) in association with the document that is in the space of storage,
-- indexing by a computer the semantic content of documents and external databases (8), accessible by transmission networks of data, and memorizing the result of indexing in the multidimensional indexing database (14) in association with respective references to external databases.
- on request of a user, searching of at least one indexed document corresponding to the query from keywords or a combination of keywords using the multidimensional indexing base (14) as well as by making semantic linked relations between the memorized documents and information from the external databases that can be used to make appear common points between universes of people or unity in organization

2. Method according to claim 1, **characterized in that** the linked relations semantic includes the search for coherences of contents revealed by common indexed words.

3. Method according to claim 2, **characterized in that** the coherences bring out commonalities between universes of people or unity in organization.

4. Method according to claim 2, **characterized in that** it further comprises a step of presentation of the results of the research, in which at least two documents found are connected to each other when they present indexed words in common, and/or, that they belong to the same directory and allowing to reveal common semantic units between different domains, a designation of a document found, permitting the opening of this one.

5. Process according to one of Claims 1 to 4, **characterized in** the names of the nested directories, in which a document is stored in the storage space (15) are defined in a pre-established classification scheme, the directories being automatically created, if necessary, at the time of filing each document in the repository.

6. Method according to any one of the preceding claims, **characterized in that** the indexing is furthermore performed on external documents and databases (8) accessible by networks (25) of data transmission.

7. Method according to any one of the preceding claims, **characterized in that** each document found during the search is displayed in a graphic form in association with at least one directory in which the document is found , each document found being presented in the form of a logotype evoking one of the directories in which the document is stored in the storage space (15) the designation of one of the found documents displaying a summary of it.

8. The method according to any of the preceding claims, **characterized in that** the indexing (13) and search engines are made from meta search engines or indexing.

9. Process according to any one of the preceding claims, **characterized in that** it further comprises steps of assigning a lifetime to at least a portion of the documents stored in the storage space (15), and removing a document from the directory where it is stored in the storage space when the life of the document has expired.

10. Method according to one of the preceding claims **characterized by** further comprising steps of:
- defining a routing of a document stored in the storage space (15), the routing specifying a previously ordered list of names of directories in which the document must be successively transferred, each directory being associated with at least one person identifier to whom the document is intended, the ordered list being associated as an attribute to the document in the indexing database.
- notification of the next person specified by a document path, after a validation command of the document completed by a previous person designated in the path, to warn the next person that the document has been made available.

11. A method according to claim 10, **characterized in that** it further comprises a step of transferring a document from the directory where it is in the storage space (15) to the next directory in the ordered list of the routing, following a validation command of the document completed by a previous person in the path.

12. Method according to any one of the preceding claims, **characterized in that** the most frequently done or the most successful search queries are analyzed to make indexing and subsequent search more efficient.

13. Document storage management system, **characterized in that** comprises means for implementing the method according to one of the Claims 1 to 12

14. Computer program, **characterized in that** it comprises program code instructions for performing the steps of a method according to any one of claims 1 to 12 when said program is executed on a computer.
